# EUROPÄISCHE PATENTANMELDUNG

(11) **EP 3 026 276 A1**
(43) Veröffentlichungstag der Anmeldung: **01.06.2016**
(21) Anmeldenummer: 15194264.6
(22) Anmeldetag: 12.11.2015
(51) Int. Cl.: F16C 17/00

(54) **BAUTEIL MIT WENIGSTENS EINER GLEITSCHICHT UND VERFAHREN ZUR HERSTELLUNG DES BAUTEILS**

(30) Priorität: 27.11.2014 DE 102014224299
(71) Anmelder: Aktiebolaget SKF, 41 550 Göteborg (SE)
(72) Erfinder: KRAUSE, Thomas, 97506 Grafenrheinfeld (DE)
(74) Vertreter: Kuhstrebe, Jochen

(57) **Zusammenfassung**

Ausführungsbeispiele betreffen ein Bauteil (1) mit wenigstens einer Gleitschicht (2). Das Bauteil (1) ist ausgebildet, um relativ beweglich zu einer anderen Komponente (3) angeordnet zu sein. Die Gleitschicht (2) umfasst einen faserverstärkten Werkstoff, wobei der faserverstärkte Werkstoff als Fasern eine Mehrzahl von Kohlenstoffnanoröhren (4) umfasst.

## Beschreibung

Ausführungsbeispiele betreffen ein Bauteil mit wenigstens einer Gleitschicht sowie ein Verfahren zur Herstellung eines Bauteils mit einer Gleitschicht.

Bauteile mit Gleitschichten oder Gleitflächen werden in einer Vielzahl von Anwendungen eingesetzt. Solche Bauteile können Komponenten einer Lagerung, beispielsweise eines Gleitlagers, einer Lineareinheit oder auch alle anderen möglichen Bauteile sein.

Die Gleitschicht kann dabei unterschiedliche Gleitmaterialien umfassen oder aus diesen hergestellt sein. Als Gleitmaterialien können beispielsweise Faserverbundwerkstoffe eingesetzt werden. Bei Faserverbundwerkstoffen, die als Gleitschichten oder Gleitmaterialien dienen, wird oft, um eine niedrige Verschleißrate und einen niedrigen Reibungskoeffizienten zu erzielen, ein möglichst hoher Anteil an Gleitzusätzen verwendet. Um ein gutes Gleitverhalten zu ermöglichen, wird in vielen Fällen ein Anteil dieser Gleitzusätze größer als 10% eines Gesamtmasseanteils der Gleitschicht gewählt.

Gleichzeitig wird zur Erzielung einer hohen Belastbarkeit der Gleitschicht oder des Gleitmaterials meist ein hoher Anteil an Verstärkungsfasern benötigt. Dieser Anteil kann beispielsweise in einem Bereich von 60 % bis 90% eines Gesamtmasseanteils der Gleitschicht liegen. Bei konventionellen Gleitschichten werden als Verstärkungsfasern oft Glas-, Kohle-, Aramid-, Polyesterfasern oder dergleichen eingesetzt. Durch den hohen Anteil an Verstärkungsfasern kann es unter Umständen vorkommen, dass nur noch sehr enge Abstände zwischen den einzelnen Verstärkungsfasern vorhanden sind. Durch diese engen Zwischenräume, zwischen den einzelnen Verstärkungsfasern, kann es gegebenenfalls schwierig sein, diese vollständig oder ausreichend mit Harz und/oder Gleitzusätzen zu imprägnieren.

Eine schlechte Imprägnierung der einzelnen Verstärkungsfasern bzw. der Faserzwischenräume kann sich unter ungünstigen Umständen negativ auf eine Belastbarkeit des Faserverbundwerkstoffs und damit auch der Gleitschicht auswirken. Eventuell können sich auch tribologische Eigenschaften der Gleitschicht dadurch verschlechtern. Ein Grund dafür kann beispielsweise sein, dass einzelne, schlecht imprägnierte Fasern durch Scherkräfte oder andere Belastungen des gleitenden Gegenkörpers aus einer Oberfläche des Faserverbundwerkstoffes herausgelöst werden können. Diese einzelnen herausgelösten Fasern können dann als Abriebpartikel bei einem Verbleib in oder an der Gleitkontaktfläche verschleißerhöhend wirken. Dies ist unerwünscht.

Es besteht daher ein Bedarf ein Bauteil mit einer verbesserten Gleitschicht sowie ein Verfahren zur Herstellung eines solchen Bauteils mit einer verbesserten Gleitschicht bereitzustellen. Diesem Bedarf tragen das Bauteil sowie das Verfahren nach den unabhängigen Ansprüchen Rechnung.

Ausführungsbeispiele betreffen ein Bauteil mit wenigstens einer Gleitschicht, wobei das Bauteil ausgebildet ist, um relativ beweglich zu einer anderen Komponente angeordnet zu sein. Die Gleitschicht umfasst einen faserverstärkten Werkstoff. Der faserverstärkte Werkstoff umfasst als Fasern eine Mehrzahl von Kohlenstoffnanoröhren. Bei manchen Ausführungsbeispielen kann so ermöglicht werden, dass die Gleitschicht verbessert ist. Dies ist möglich, weil der Werkstoff bei manchen Ausführungsbeispielen gegenüber konventionellen faserverstärkten Werkstoffen oder Faserverbundwerkstoffen eine bessere Wärmeleitfähigkeit aufweist. Konventionelle faserverstärkte Werkstoffe können eine niedrige Wärmeleitfähigkeit aufweisen und deshalb oft bei Überschreitung der zulässigen Dauergebrauchstemperatur des Matrixharzes durch Überhitzung versagen. Mit einer möglichst hohen Wärmeleitfähigkeit kann eventuell eine niedrigere Verschleißrate erzielt werden, weil eine durch Reibung erzeugte Wärme möglichst schnell an benachbarte Bauteile geleitet werden kann.

Bei den Kohlenstoffnanoröhren, auch CNT genannt (von englisch: carbon nanotubes) kann es sich beispielsweise um mikroskopisch kleine röhrenförmige Gebilde (molekulare Nanoröhren) aus Kohlenstoff handeln. Diese können eine hohlzylindrische Form, beispielsweise eines Kreiszylinders aufweisen. Eine Wand einer Kohlenstoffnanoröhre kann, wie die der Fullerene oder wie die Ebenen des Graphits - eine einzelne Ebene des Graphits wird als Graphen bezeichnet - nur aus Kohlenstoff bestehen, wobei die Kohlenstoffatome eine wabenartige Struktur mit Sechsecken und jeweils drei Bindungspartnern einnehmen (vorgegeben durch die sp2-Hybridisierung). Der Durchmesser der Röhren kann beispielsweise in einem Bereich von 0,4 bis 50 nm, liegen. Die Kohlenstoffnanoröhren können eine Länge von wenigen nm bis hin zu mehreren Millimetern, zum Beispiel 0,1 nm, bis 11 mm aufweisen. Ferner kann man auch zwischen ein- und mehrwandigen, zwischen offenen oder geschlossenen Röhren (mit einem Deckel, der einen Ausschnitt aus einer Fullerenstruktur hat) und zwischen leeren und gefüllten Röhren (beispielsweise mit Silber, flüssigem Blei oder Edelgasen) unterscheiden. Bei manchen Ausführungsbeispielen kann dadurch, dass die Kohlenstoffnanoröhren eine Füllung aufweisen, eine bessere Beständigkeit in Hochtemperaturanwendungen erreicht werden.

Ein Bauteil, das relativ beweglich zu einer anderen Komponente angeordnet ist, kann sich gegenüber der anderen Komponente bewegen. Dabei kann die andere Komponente fest und unbeweglich angeordnet sein. Alternativ kann sich auch die andere Komponente gegenüber dem fest und unbeweglich angeordneten Bauteil bewegen. Unter Umständen können auch das Bauteil und die Komponente Bewegungen ausführen. Bei den Bewegungen des Bauteils und/oder der Komponente kann es sich dabei um rotatorische und/oder translatorische Bewegungen handeln. Das relativ beweglich angeordnete Bauteil kann beispielsweise ausgebildet sein, um über die Gleitschicht entlang wenigstens einer Bewegungslinie zu gleiten. Ein Gleiten des Bauteils über die Gleitschicht kann dabei beispielsweise einen Reibkontakt mit der anderen Komponente bedingen.
Ergänzend können die Kohlenstoffnanoröhren auf und/oder an ihrer Oberfläche wenigstens eine Carboxy-Gruppe aufweisen. Bei manchen Ausführungsbeispielen kann so ermöglicht werden, dass sich die Kohlenstoffnanoröhren in dem faserverstärkten Werkstoff im Wesentlichen gleichmäßig verteilen und keine ungewollten Anhäufungen oder Agglomerationen bilden. Bei manchen Ausführungsbeispielen können so die Festigkeit und/oder ein homogenes Verhalten der Gleitschicht bzw. des faserverstärkten Werkstoffs erhöht sein.

Ergänzend oder alternativ kann es sich bei den Kohlenstoffnanoröhren um einwandige Kohlenstoffnanoröhren handeln. Bei manchen Ausführungsbeispielen kann so eine ausreichende Festigkeit erreicht werden. Unter Umständen kann der faserverstärkte Werkstoff auch mehrwandige Kohlenstoffnanoröhren aufweisen. Bei manchen Ausführungsbeispielen kann so auch eine Festigkeit der Gleitschicht erhöht sein. Beispielsweise können in dem Werkstoff Kohlenstoffnanoröhren mit unterschiedlichen Wandanzahlen vorgesehen sein. Mehrwandige Kohlenstoffnanoröhren können beispielsweise zweiwandig, dreiwandig oder vierwandig sein oder eine höhere Anzahl von Wänden aufweisen.

Ergänzend oder alternativ kann ein Masseanteil der Mehrzahl der Kohlenstoffnanoröhren kleiner sein als 10%, 5%, 2% und/oder 0,6% eines Gesamtmasseanteils der Gleitschicht. Bei manchen Ausführungsbeispielen kann dadurch ermöglicht werden, dass der Anteil der Fasern in dem faserverstärkten Werkstoff deutlich reduziert sein kann. Dies kann beispielsweise möglich sein, weil die Kohlenstoffnanoröhren eine höhere Festigkeit als andere, konventionell verwendete Fasern, zum Beispiel Glasfasern, Kohlefasern, Aramidfasern, Polyesterfasern und/oder dergleichen aufweisen. Der faserverstärkte Werkstoff kann bei manchen Ausführungsbeispielen einen vergleichsmäßig höheren Anteil an Matrixmaterial oder Matrixharz aufweisen, also eventuell mehr als 10%, 20%, 30%, 40%, 50%, 60% oder sogar 70%, wodurch sich eine bessere Imprägnierung der einzelnen Fasern oder Kohlenstoffnanoröhrchen ergeben kann. Da der faserverstärkte Werkstoff gemäß manchen Ausführungsbeispielen im Vergleich zu konventionellen faserverstärkten Werkstoffen einen höheren Anteil an Matrixmaterial aufweist, kann der faserverstärkte Werkstoff auch einen höheren Anteil, beispielsweise mehr als 20%, 30% oder sogar 40% an Additiven, zum Beispiel Gleitzusätzen und/oder Gleitmitteln aufweisen. Dies kann möglich sein, weil dem Matrixharz oder Matrixmaterial nur ein bestimmter Anteil an Additiven zugemischt werden kann. Da nur ein geringerer Anteil an Fasern als Additiv zugesetzt ist, kann unter Umständen ein höherer Anteil mit anderen Additiven oder Komponenten aufgefüllt sein. Beispielsweise kann ein Masseanteil der Mehrzahl der Kohlenstoffnanoröhren maximal einen Anteil von 60%, 50%, 40%, 25% des Gesamtmasseanteils der Gleitschicht ausmachen. Bei manchen Ausführungsbeispielen kann so ermöglicht werden, dass noch ein ausreichender Anteil des Gesamtmasseanteils der Gleitschicht für das Matrixmaterial und/oder die anderen Additive zur Verfügung steht.

Bei manchen Ausführungsbeispielen umfasst der faserverstärkte Werkstoff ein Gleitmittel, welches in dem Matrixmaterial oder dem faserverstärkten Werkstoff verteilt ist. Bei manchen Ausführungsbeispielen kann so ein Reibkoeffizient der Gleitschicht verbessert werden. Als Gleitmittel können beispielsweise Polytetrafluorethylen (PTFE), Grafit und/oder Molybdänsulfid (MoS2) eingesetzt werden. Das Gleitmittel kann beispielsweise als Pulver, Faser und/oder sogar als Gewebe in dem Matrixmaterial angeordnet sein. Bei den Fasern kann es sich um lange, kontinuierliche oder kurze Fasern handeln.

Als Matrixmaterial kann bei manchen Ausführungsbeispielen ein thermoplastischer oder ein duroplastischer Kunststoff eingesetzt werden. Als duroplastische Kunststoffe kommen beispielsweise Phenolharz, Melaminharz, Polyesterharz und/oder Polyimidharz in Frage. Das Matrixmaterial dient beispielsweise dazu, die Fasern und eventuell noch andere Additive aufzunehmen.

Ergänzend oder alternativ ist das Bauteil bei manchen Ausführungsbeispielen als ein Gleitlager, eine Gleitlagerbuchse und/oder als eine Linearführung ausgebildet. Bei manchen Ausführungsbeispielen kann so ermöglicht werden, dass Gleiteigenschaften des Gleitlagers, der Gleitlagerbuchse, und/oder der Linearführung verbessert werden können. Dabei kann beispielsweise nur eine Oberfläche des Bauteils ganz oder teilweise mit dem faserverstärkten Werkstoff als Gleitschicht bedeckt sein. Gegebenenfalls kann dann ein Grundkörper des Bauteils ein anderes Material als die Gleitschicht umfassen. Alternativ kann das Bauteil auch vollständig aus dem Material der Gleitschicht hergestellt sein.

Ausführungsbeispiele betreffen auch ein Verfahren zum Herstellen eines Bauteils mit wenigstens einer Gleitschicht, wobei das Bauteil ausgebildet ist, um relativ beweglich zu einer anderen Komponente angeordnet zu sein. Bei dem Verfahren wird eine Gleitschicht für das Bauteil aus einem faserverstärkten Werkstoff hergestellt. Der Werkstoff umfasst als Fasern eine Mehrzahl von Kohlenstoffnanoröhren.

Bei manchen Ausführungsbeispielen des Verfahrens wird die Mehrzahl der Kohlenstoffnanoröhren vor dem Herstellen der Gleitschicht vorbehandelt. Die Vorbehandlung erfolgt dabei so, dass sich an einer Oberfläche der Kohlenstoffnanoröhren Carboxy-Gruppen bilden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

So zeigen die Figuren schematisch die nachfolgenden Ansichten.
- Fig. 1: eine schematische Schnittdarstellung eines Bauteils mit einer Gleitschicht gemäß einem Ausführungsbeispiel;
- Fig. 2: eine schematische Darstellung eines Verfahrens zur Herstellung eines Bauteils mit einer Gleitschicht gemäß einem Ausführungsbeispiel;

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

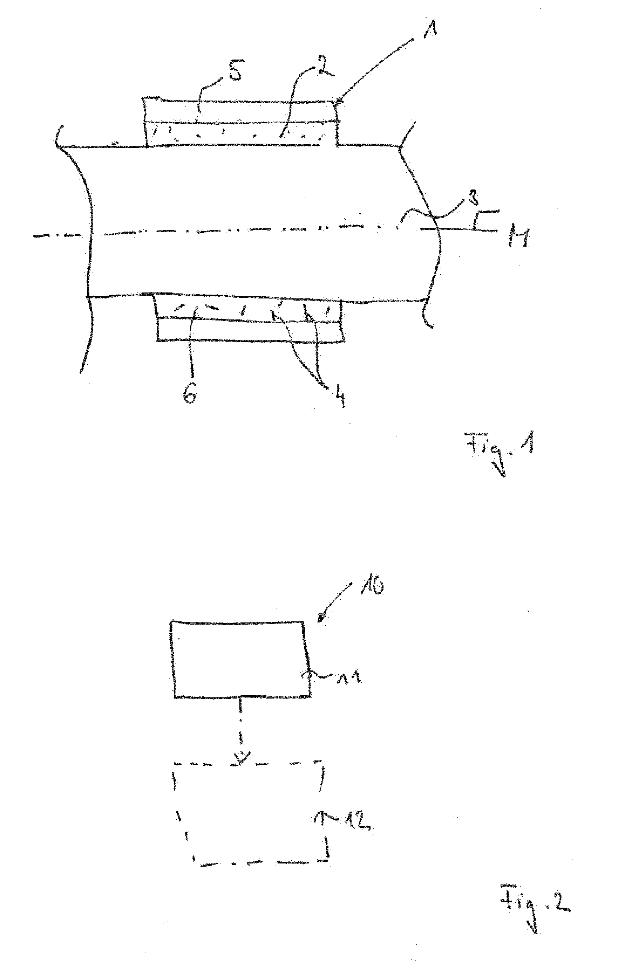

Fig. 1 zeigt eine schematische Schnittdarstellung eines Bauteils 1 mit einer Gleitschicht 2 gemäß einem Ausführungsbeispiel. Das Bauteil 1 mit der wenigstens einen Gleitschicht 2 ist relativ beweglich zu einer anderen Komponente 3 angeordnet. Die Gleitschicht 2 umfasst einen faserverstärkten Werkstoff. Der faserverstärkte Werkstoff weist als Fasern eine Mehrzahl von Kohlenstoffnanoröhren 4 auf. Bei dem Ausführungsbeispiel der Fig. 1 handelt es sich um offene und ungefüllte Kohlenstoffnanoröhren. Bei anderen Ausführungsbeispielen kann es sich auch um geschlossene und/oder gefüllte Kohlenstoffnanoröhren handeln.

Die Kohlenstoffnanoröhren 4 sind bei dem Ausführungsbeispiel der Fig. 1 gleichmäßig aber ohne besondere Orientierung in dem faserverstärkten Werkstoff verteilt. Bei anderen, nicht dargestellten Ausführungsbeispielen können die Kohlenstoffnanoröhren in einem Muster zueinander, beispielsweise parallel zueinander, angeordnet sein.

Die Gleitschicht 2 des Bauteils 1 kann beispielsweise eine Oberfläche des Bauteils 3 sein, die mit der anderen Komponente in einem Gleit- und/oder Reibkontakt steht. Bei manchen Ausführungsbeispielen kann eine der anderen Komponente 3 zugewandte Seite der Gleitschicht 2 auch als Gleitfläche bezeichnet werden. Die Gleitschicht 2 kann dabei eine Dicke aufweisen, die kleiner ist als eine Gesamtdicke des Bauteils. Die Gleitschicht kann dabei beispielsweise an nur einer und/oder einer Mehrzahl und/oder sogar allen Oberflächen des Bauteils angeordnet sein.

Bei dem Ausführungsbeispiel der Fig. 1 ist das Bauteil 1 als Gleitlagerbuchse ausgebildet und die andere Komponente 3 als Welle. Bei der Gleitlagerbuchse handelt es sich um einen rohrförmigen Körper. Die Gleitschicht 2 ist radial innen an einem rohrförmigen Grundkörper 5 der Gleitlagerbuchse angeordnet. Genauso gut könnte die andere Komponente auch ein Gehäuse sein, in dem das Bauteil oder die Gleitlagerbuchse angeordnet ist. Die Gleitschicht wäre dann jedoch zumindest an der Oberfläche des Bauteils angeordnet sein, das relativ beweglich zu der anderen Komponente angeordnet ist. Unter Umständen kann der Grundköper dann eine andere Form aufweisen, beispielsweise eine Platte, eine Schiene, ein Bauteil mit einer Führungsnut oder dergleichen. Bei einigen weiteren, nicht dargestellten Ausführungsbeispiele kann es sich bei er benachbarten Komponente um ein benachbartes Bauteil handeln, wie einen Lagerring, eine Welle, ein Wellengehäuse, ein Gehäuse, eine Bohrung oder dergleichen. Bei dem Bauteil kann es sich beispielsweise um eine Gleitlagerbuchse, einen Lagerring, eine Gleitschiene, eine Gleitfläche, ein Bauteil einer Linearführung oder dergleichen handeln.

Bei einigen weiteren, nicht dargestellten Ausführungsbeispielen kann das ganze Bauteil aus dem gleichen Material wie die Gleitschicht bestehen. Alternativ kann das Bauteil noch weitere Komponenten, beispielsweise den Grundkörper aufweisen, auf dem die Gleitschicht angeordnet ist.

Bei dem Ausführungsbeispiel der Figuren kann entweder die andere Komponente 3 feststehend ausgeführt sein und das Bauteil 1 kann sich gegenüber der Komponente 3 bewegen. Genauso gut kann das Bauteil 1, als relativ beweglich angeordnetes Bauteil, feststehend angeordnet sein und die andere Komponente 3 kann sich gegenüber dem Bauteil 1 bewegen. Analog können sowohl das Bauteil 1 wie auch die andere Komponente 3 Bewegungen gegeneinander ausführen. Bei diesen Bewegungen kann es sich sowohl um translatorische Bewegungen, entlang einer Mittelachse M, wie auch um rotatorische Bewegungen um die Mittelachse M handeln.

Die Gleitschicht 2 oder der faserverstärkte Werkstoff, welcher auch als Gleitmaterial bezeichnet werden kann, umfassen ein Matrixmaterial 6. Bei dem Ausführungsbeispiel der Fig. 1 umfasst der faserverstärkte Werkstoff ein duroplastisches Harz als Matrixmaterial 6, sowie nicht dargestellte Gleitzusätze oder Gleitmittel. Neben Epoxidharz können auch andere Matrixharze, beispielsweise Phenolharz, Melaminharz, Polyesterharz als Matrixmaterial eingesetzt werden. Bei anderen Ausführungsbeispielen kann auch ein thermoplastisches Matrixmaterial eingesetzt werden. Bei den nicht dargestellten Gleitzusätzen des faserverstärkten Werkstoffs kann es sich um PTFE, MoS2 und/oder Grafit oder dergleichen handeln. Bei manchen Ausführungsbeispielen können die Gleitzusätze auch entfallen. In das Matrixmaterial 6 sind als Verstärkungsfasern die Kohlenstoffnanoröhren 4 eingemischt. Diese können auch als Carbon Nanotubes (Abkürzung CNT's) bezeichnet werden. Dabei kann es sich um einwandige oder mehrwandige, vorbehandelten oder nicht vorbehandelten Kohlenstoffnanoröhren 4. Wie die Vorbehandlung erfolgen kann, wird im Folgenden erläutert.

Die Kohlenstoffnanoröhren 4 sind bei dem Ausführungsbeispiel der Fig. 1 auf eine spezielle Art und Weise funktionalisiert bzw. vorbehandelt. Speziell funktionalisierte Kohlenstoffnanoröhren 4 können beispielsweise durch eine Vorbehandlung so verändert und/oder bearbeitet sein, dass eine sehr gute Verbindung zwischen den Kohlenstoffnanoröhren 4 und dem Matrixmaterial 6, welches auch als Harzmatrix bezeichnet werden kann, entsteht. Durch die besonders gute Verbindung zwischen den Kohlenstoffnanoröhren 4 und dem Matrixmaterial 6 kann bereits bei einem sehr geringen Masseanteil von Kohlenstoffröhren 4 ein faserverstärkter Werkstoff, welcher auch als Verbund bezeichnet werden kann, mit einer hohen Schlagzähigkeit, Biegesteifigkeit und thermischer Leitfähigkeit bereitgestellt werden. Ein sehr geringer Masseanteil der Kohlenstoffnanoröhren 4 kann beispielsweise 0,6% eines Gesamtmasseanteils des faserverstärkten Werkstoffs der Gleitschicht 2 entsprechen.

Bei manchen Ausführungsbeispielen kann die Gleitschicht 2 vollständig aus dem faserverstärkten Werkstoff hergestellt sein. Bei anderen Ausführungsbeispielen kann die Gleitschicht 2 neben dem faserverstärkten Werkstoff auch noch anderen Materialien und/oder Komponenten umfassen. Unter Umständen können die Gleitschicht 2 oder der faserverstärkte Werkstoff bei Bedarf zusätzliche, nicht dargestellte Standardfasern umfassen. Bei den zusätzlichen Standardfasern kann es sich beispielsweise um Fasern aus einem anderen Material als die Kohlenstoffnanoröhren 4 handeln. Mit anderen Worten kann der faserverstärkte Werkstoff eine Mehrzahl von Kohlenstoffnanoröhren 4 und wenigsten eine andere Faserart umfassen. Beispielsweise kann es sich bei der anderen Faserart um Polyesterfasern, Aramidfasern und/oder Kohlefasern handeln. Diese Standardfasern können beispielsweise als einzelne lose Fasern, als Faserstränge und/oder als Gewebe vorliegen. Durch den geringen Masseanteil der Kohlenstoffnanoröhren 4 kann der Masseanteil an nicht dargestellten Standardfasern unter Umständen bei manchen Ausführungsbeispielen gegenüber konventionellen Verbundwerkstoffen deutlich reduziert werden. Dadurch können beispielsweise andere Bestandteile oder Additive des faserverstärkten Werkstoffs bzw. deren Anteile erhöht werden. Solche Additive oder Zusätze können beispielsweise Gleitzusätze und/oder Gleitmittel oder Gleitmaterialien sein. Diese können zum Beispiel aus tribologischen Gründen notwendig sein. Optional kann bei Beibehaltung des Masseanteils der Standardfasern durch Zugabe der Kohlenstoffnanoröhren oder der funktionalisierten Kohlenstoffnanoröhren bei manchen Ausführungsbeispielen eine mechanische Belastbarkeit der Gleitschicht 2 gesteigert werden. Alternativ kann der faserverstärkte Werkstoff auch als einzige Faserart die Kohlenstoffnanoröhren 4 aufweisen. Mit anderen Worten umfasst das Bauteil 1 ein Gleitmaterial, das mit Kohlenstoffnanoröhren 4, welche auch als Carbon Nanotubes bezeichnet werden können, verstärkt ist.

Bei dem faserverstärkten Werkstoff der Gleitschicht 2 kann es sich beispielsweise um ein Faserverbundwerkstoff auf Basis eines Epoxidharzes in Kombination mit speziell funktionalisierten ein- und/oder mehrwandigen Kohlenstoffnanoröhren 4 handeln (von englisch: multi-walled-carbon nano tubes; Abk.: MWCNT). Die ein- oder mehrwandigen Kohlenstoffnanoröhren 4 werden zunächst mit einer konzentrierten Säurekombination aus H2SO4 und HNO3 in einem Mischungsverhältnis 3:1 vorbehandelt, um Carboxy-Gruppen auf den Oberflächen der Kohlenstoffnanoröhren zu generieren. Die Kohlenstoffnanoröhren können dann als MWCNT-COOH bezeichnet werden. In einem weiteren Vorgang werden die so vorbehandelten MWCNT-COOH in einer SOCI2-Lösung (Thionylchlorid-Lösung) in MWCNT-COCI umgewandelt und mit Triethylentetraamin (TETA) zu TETA-MWCNT aufgepfropft und/oder umgewandelt. Die Carboxygruppe, welche auch als Carboxylgruppe bezeichnet werden, können ist in der Chemie beispielsweise eine funktionelle Gruppe - COOH der Carbonsäuren. Der Name leitet sich formal aus der Kombination der beiden enthaltenen Elemente Carbonylgruppe und Hydroxygruppe her. Das Carboxykohlenstoffatom trägt ein doppeltgebundenes Sauerstoffatom und eine einfach gebundene Hydroxygruppe. Aufgrund der Elektronegativitätsdifferenz zwischen dem Sauerstoff und Kohlenstoff trägt das Kohlenstoffatom eine positive Partialladung. Die Hydroxyeinheit der Carboxygruppe ist verhältnismäßig sauer, das Proton wird leicht an einen entsprechenden Partner abgegeben. Diese im Vergleich zu Alkoholen erhöhte Acidität (Säurestärke) liegt in der Resonanzstabilisierung der korrespondierenden Base, dem negativ geladenen Carboxylat-Anion, begründet. Im Carboxylat-Anion sind die Sauerstoffatome gleichwertig, das heißt die negative Ladung ist auf beide Sauerstoffatome verteilt und beide C-O-Bindungen besitzen partiellen Doppelbindungscharakter.

Eine Funktionalisierung mit Triethylentetraamin, welche auch als TETA-Funktionalisierung der MWCNT-Oberfläche, bezeichnet werden kann, kann bei manchen Ausführungsbeispielen zum einen einerseits effizient verhindern, dass sich die Kohlenstoffnanoröhren 4 bei einem Einmischen in das flüssige Matrixmaterial 6 agglomerieren. Andererseits kann sich dadurch bei manchen Ausführungsbeispielen eine hervorragende chemische Verbindungsschicht zwischen den Kohlenstoffnanoröhren 4 und dem Matrixmaterial 6, welches auch als Harzmatrix bezeichnet werden kann, ergeben. Bei manchen Ausführungsbeispielen kann so eine mechanische Eigenschaft der Gleitschicht 2 bzw. des faserverstärkten Werkstoffs, welcher auch als Faserverbund bezeichnet werden kann, schon bei einem Masseanteil von mindesten 0,6% von Kohlenstoffnanoröhren 4, bezogen auf den Gesamtmasseanteil des faserverstärkten Werkstoffs, deutlich gesteigert werden. Eine Schlagzähigkeit des Faserverbunds der funktionalisierten TETA-Kohlenstoffnanoröhren kann bei manchen Ausführungsbeispielen im Vergleich zu reinem Epoxidharz um 84%, eine Biegesteifigkeit um bis zu 29% und ein E-Modul um bis zu 22% gesteigert werden.

Durch den Einsatz von unbehandelten oder auch behandelten Kohlenstoffnanoröhren kann die Gleitschicht 2 gegenüber Gleitschichten mit lediglich konventionellen Verstärkungsfasern, wie Glasfasern, Kohlefasern, Aramidfasern eine hohe spezifische Festigkeit, Steifigkeit und thermische Leitfähigkeit erhalten und es können unter Umständen bereits bei deutlich niedrigeren Masseanteilen von weniger als 2% im Vergleich zu konventionellen Verstärkungsfasern, bei Faserverbundwerkstoffen gleichwertige oder sogar bessere Eigenschaften erzielt werden. Das Bauteil 1 gemäß Ausführungsbeispielen umfasst eine tribologisch und/oder mechanisch optimierte Gleitschicht 2 aus einem Faserverbundwerkstoff.

Fig. 2 zeigt eine schematische Darstellung eines Verfahrens 10 zur Herstellung eines Bauteils mit wenigstens einer Gleitschicht gemäß einem Ausführungsbeispiel. Bei dem Verfahren 10 wird in einem Vorgang 11 eine Gleitschicht für das Bauteil aus einem faserverstärkten Werkstoff hergestellt. Der Werkstoff umfasst als Faser eine Mehrzahl von Kohlenstoffnanoröhren.

Bei weiteren Ausführungsbeispielen umfasst das Verfahren 10 auch einen gestrichelt dargestellten Vorgang 12. Bei anderen Ausführungsbeispielen kann dieser Vorgang auch entfallen. In dem Vorgang 12 erfolgt ein Vorbehandeln der Mehrzahl der Kohlenstoffnanoröhren vor dem Herstellen der Gleitschicht, sodass auf einer Oberfläche der Kohlenstoffnanoröhren Carboxy-Gruppen entstehen. Diese Vorbehandlung kann auf die bereits beschriebene oder auf andere Art und Weise erfolgen.

Durch die Vorbehandlung der Kohlenstoffnanoröhren in dem Vorgang 12 kann bei manchen Ausführungsbeispielen das Problem der schlechten Dispergierbarkeit der Kohlenstoffnanoröhren und deren Neigung zur Agglomeratbildung behoben oder zumindest reduziert werden und eventuell eine ungenügende chemische Anbindung der Kohlenstoffnanoröhrenoberfläche zu dem Matrixmaterial 6 bzw. der Harzmatrix vermieden oder zumindest reduziert werden. Bei manchen Ausführungsbeispielen kann eine Wärmeleitfähigkeit im Vergleich zu Verbundwerkstoffen von unbehandelten Kohlenstoffnanoröhren erhöht sein. Ferner kann durch die Vorbehandlung der Kohlenstoffnanoröhren und die damit verbundene deutliche Verbesserung der mechanischen Eigenschaften, schon bei einem Masseanteil von nur 0,6% oder mehr an Kohlenstoffnanoröhren, bei manchen Ausführungsbeispielen der Anteil der tribologisch möglicherweise notwendigen Zusätze, wie beispielsweise PTFE, MoS2 und/oder Graphit in dem faserverstärkten Werkstoff zugunsten einer Verschleißreduzierung erhöht werden. Der Anteil anderer Verstärkungsfasern, wie beispielsweise Glas-, Kohle-, Aramid- und/oder Polyesterfaser kann bei gleicher Belastungsanforderung reduziert werden, wobei sich durch die automatische Erhöhung der Standardfaserbestände eine bessere Imprägnierbarkeit der Standardfasern und somit eine weitere Verschleißreduzierung der Gleitschicht 2 ergeben kann. Eine Faser kann zum Beispiel ein Element oder ein Bauteil sein, das in eine Richtung eine wesentliche größere Ausdehnung aufweist als in eine zweite und in eine dritte Richtung, wobei die drei Richtungen ein Koordinatensystem zwischen sich aufspannen. Die Ausdehnung der Faser kann eventuell in die erste Richtung um mindestens einen Faktor 100, 1.000, 10.000, 100.000 größer sein, als in die beiden anderen Richtungen sein. Die Faser kann dabei senkrecht zu einer Haupterstreckungsrichtung, also der ersten Richtung jedweden Querschnitt aufweisen, beispielsweise Kreis, Rechtecke, Viereck, Oval od. dgl. Unter Beibehaltung des Anteils an Standardfasern kann die Belastbarkeit der Gleitschicht 2 durch Zugabe der Kohlenstoffnanoröhren 4 möglicherweise erhöht werden. Ferner kann bei manchen Ausführungsbeispielen durch die verbesserte Verbindung der funktionalisierten Kohlenstoffnanoröhren 4 mit der Harzmatrix oder dem Matrixmaterial 6 eine Erhöhung der Wärmeleitfähigkeit erreicht werden, welche ebenfalls einer weiteren Reduzierung der Verschleißrate solcher Gleitschichten beiträgt. Zudem kann eventuell durch eine Erhöhung der Schlagzähigkeit bei Verwendung der Kohlenstoffnanofasern der Einsatz der Gleitschichten in stark beanspruchten und/oder vibrationsbeaufschlagten Gleitlagern oder Linearführungen bei einer besseren Funktion dieser Gleitlager oder Linearführungen führen.

Bauteile gemäß Ausführungsbeispielen können im Bereich von Gleitlagern, Linearführungen oder bei Linearsystemen eingesetzt werden. Die Bauteile können in allen möglichen Anwendungen, beispielsweise bei Fahrzeugen, Arbeitsmaschinen, in der Fördertechnik etc. eingesetzt werden. Es kann sich dabei um trocken laufende und/oder wartungsfreie, wie auch geschmierte Gleitlager und/oder Linearführungssysteme handeln. Die Bauteil können in verschiedensten Medien, beispielsweise Luft, Vakuum, unter Wasser/Öl und/oder dergleichen eingesetzt und angewendet werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können gegebenenfalls auch Merkmale, die in manchen Ausführungsbeispielen als Verfahrensmerkmale implementiert sind, in anderen Ausführungsbeispielen als Vorrichtungsmerkmale implementiert sein.

### Bezugszeichenliste

- 1: Bauteil
- 2: Gleitschicht
- 3: Komponente
- 4: Kohlenstoffnanoröhren
- 5: Grundkörper
- 6: Matrixmaterial
- 10: Verfahren
- 11: Vorgang
- 12: Vorgang
- M: Mittelachse

## Patentansprüche

1. Bauteil (1) mit wenigstens einer Gleitschicht (2), wobei das Bauteil (1) ausgebildet ist, um relativ beweglich zu einer anderen Komponente (3) angeordnet zu sein, wobei die Gleitschicht (2) einen faserverstärkten Werkstoff umfasst,
wobei der faserverstärkte Werkstoff als Fasern eine Mehrzahl von Kohlenstoffnanoröhren (4) umfasst.

2. Bauteil nach Anspruch 1, wobei der faserverstärke Werkstoff Fasern umfasst, die ein anderes Material als die Kohlenstoffnanoröhren (4) umfassen.

3. Bauteil nach einem der vorhergehenden Ansprüche, wobei die Kohlenstoffnanoröhren (4) auf ihrer Oberfläche wenigstens eine Carboxy-Gruppe aufweisen, die durch eine Vorbehandlung mit einer hochkonzentrierten Säurekombination aus H2SO4 und HNO3 erzeugt werden.

4. Bauteil nach einem der vorhergehenden Ansprüche, wobei die Kohlenstoffnanoröhren (4) drei- und/oder vierwandige Kohlenstoffnanoröhren (4) sind.

5. Bauteil nach einem der vorhergehenden Ansprüche, wobei die Kohlenstoffnanoröhren (4) eine Füllung aufweisen.

6. Bauteil nach einem der vorhergehenden Ansprüche, wobei der faserverstärkte Werkstoff ein Gleitmittel, umfasst, welches in einem Matrixmaterial (6) des faserverstärkten Werkstoffs verteilt ist, wobei das Gleitmittel wenigstens eine Faser ist und/oder als Gewebe in dem Matrixmaterial angeordnet ist und/oder wobei das Gleitmittel Polytetrafluorethylen (PTFE), Graphit und/oder Molybdändisulfid (MoS2) ist.

7. Bauteil nach einem der vorhergehenden Ansprüche, wobei das Bauteil (1) vollständig aus dem Material der Gleitschicht (2) hergestellt ist.

8. Bauteil nach einem der vorhergehenden Ansprüche, wobei das Bauteil (1) ein Gleitlager, eine Gleitlagerbuchse und/oder eine Linearführung ist.

9. Verfahren (10) zur Herstellung eines Bauteil (1) mit wenigstens einer Gleitschicht (2), wobei das Bauteil (1) ausgebildet ist, um relativ beweglich zu einer anderen Komponente (3) angeordnet zu sein, umfassend:
Herstellen (11) einer Gleitschicht (2) für das Bauteil (1) aus einem faserverstärkten Werkstoff, wobei der Werkstoff als Fasern eine Mehrzahl von Kohlenstoffnanoröhren (4) umfasst.

10. Verfahren nach Anspruch 9, ferner umfassend:
Vorbehandeln (12) der Mehrzahl der Kohlenstoffnanoröhren (4) vor dem Herstellen der Gleitschicht (2) mit einer Säurekombination aus H2SO4 und HNO3, sodass auf einer Oberfläche der Kohlenstoffnanoröhren (4) wenigsten eine Carboxy-Gruppe entsteht.
